# EUROPÄISCHE PATENTSCHRIFT

(11) **EP 3 583 444 B1**
(45) Veröffentlichungstag und Bekanntmachung des Hinweises auf die Patenterteilung: **27.09.2023**
(21) Anmeldenummer: 18703980.5
(22) Anmeldetag: 07.02.2018
(51) Int. Cl.: G01S 17/42, G01S 7/481

(54) **LIDAR-SENSOR ZUR ERFASSUNG EINES OBJEKTES**
LIDAR SENSOR FOR DETECTING AN OBJECT
CAPTEUR LIDAR SERVANT À DÉTECTER UN OBJET

(30) Priorität: 20.02.2017 DE 102017202634
(43) Veröffentlichungstag der Anmeldung: 25.12.2019
(73) Patentinhaber: Robert Bosch GmbH, 70442 Stuttgart (DE)
(72) Erfinder: BOGATSCHER, Siegwart, 74372 Sersheim (DE); SPARBERT, Jan, 71277 Rutesheim (DE); SCHNITZER, Reiner, 72762 Reutlingen (DE)
(86) Internationale Anmeldenummer: PCT/EP2018/053000
(87) Internationale Veröffentlichungsnummer: WO 2018/149704

(56) Entgegenhaltungen:
- WO-A1-2011/144454
- DE-A1- 19 752 888
- US-A1- 2016 033 626
- US-A1- 2016 146 927

## Beschreibung

Die vorliegende Erfindung betrifft einen Lidar-Sensor und ein Verfahren zur Ansteuerung eines Lidar-Sensors gemäß dem Oberbegriff der unabhängig formulierten Ansprüche.

### Stand der Technik

Aus dem Stand der Technik sind verschiedene Sensoreinrichtungen bekannt, die es ermöglichen, Objekte innerhalb eines Abtastraumes in der Umgebung beispielsweise eines Fahrzeugs zu erfassen. Hierzu gehören Lidar-Sensoren (LIDAR, Light Detection And Ranging), mit denen die Umgebung des Fahrzeugs abgetastet wird. Die von einem Lidar-Sensor emittierte elektromagnetische Strahlung wird von Objekten in der Umgebung reflektiert bzw. zurückgestreut und von einem optischen Empfänger des Lidar-Sensors empfangen. Anhand dieser empfangenen Strahlung können die Position und die Entfernung von Objekten in der Umgebung bestimmt werden.

Aus der DE102008055159 A1 ist eine Vorrichtung zur Aufnahme der Geometrie der Umgebung der Vorrichtung in einem Detektionsfeld mittels Laserabtastung mit einem durch einen schwingenden mikromechanischen Spiegel gelenkten Laserstrahl bekannt. Hierbei ist das Detektionsfeld in vertikaler und in horizontaler Richtung durch eine Anpassung der Schwingungsamplitude und/oder Schwingungsfrequenz des mikromechanischen Spiegels vorgebbar.

Aus der DE 4440613 sind monokulare 3D Kameras für time-of-flight-Abstandsmessungen bekannt.

Aus der WO 2011/144454 A1 ist ein abtastender 3D-Bildgeber zum Aufzeichnen von Bildern einer Szene bekannt. Dieser umfasst eine Lichtquelle, die zum Emittieren eines fächerförmigen gepulsten Lichtstrahls mit linearem Querschnitt konfiguriert ist, und einen im Lichtweg des Lichtstrahls angeordneten Abtastspiegel zum Leiten des Lichtstrahls in die Szene und zum sukzessiven Beleuchten von Szenenschnitten durch Bewegen des Lichtstrahls durch die Szene quer zu ihrem linearen Querschnitt, und einen Bildgeberchip zum Empfangen von Licht von der Szene über den Abtastspiegel, wobei der Bildgeberchip eine Photosensoranordnung aufweist, auf der die beleuchteten Schnitte der Szene nacheinander abgebildet werden.

Aus der DE 197 52 888 A1 ist ein mikrooptischer Laserscanner bekannt, bei dem der abtastende Lichtstrahl in einer ersten lateral verschieblichen refraktiven mikrooptischen Optikbaugruppe (erste Scanstufe) abgelenkt wird und anschließend der abgelenkte Lichtstrahl in mindestens einer weiteren verschieblichen refraktiven mikrooptischen Optikbaugruppe (zweite Scanstufe) ein zweites Mal abgelenkt wird. Zwischen den beiden Scanstufen erfolgt eine Redirektion des Laserlichtstrahl in einer Mikrolinse und eine Fokussierung der einzelnen Lichtstrahlenbündel durch einen Mikrolinsenarray. Bei der ersten Ablenkung wird das Scanfeld grob adressiert, während die zweite Optikbaugruppe zu einer Feinabstimmung innerhalb der groben Rasterung der ersten Optikbaugruppe führt.

Um Lidar-Sensoren platzsparend in oder an bestimmten Bereichen eines Fahrzeugs anzubringen, wären Lidar-Sensoren von Vorteil, die ein geringeres Bauvolumen bzw. eine geringere Bauhöhe als bisher bekannte Lösungen aufweisen. Weiterhin ist ein Bedarf an mechanisch robusten Lidar-Sensoren insbesondere für die Verwendung in Fahrzeugen vorhanden.

### Offenbarung der Erfindung

Die vorliegende Erfindung wird durch die unabhängigen Ansprüche definiert. Die vorliegende Erfindung geht aus von einem Lidar-Sensor zur Erfassung eines Objektes in der Umgebung mit wenigstens einer Lichtquelle zur Emission elektromagnetischer Strahlung, einem Ablenkspiegel zum Ablenken der emittierten elektromagnetischen Strahlung um wenigstens einen Winkel in die Umgebung, einem optischen Empfänger zum Empfangen elektromagnetischer Strahlung die vom Objekt reflektiert wurde, und einem Spiegel zum Umlenken der empfangenen elektromagnetischen Strahlung auf den optischen Empfänger. Der Spiegel weist ein Loch auf, wobei das Loch auf einer Hauptstrahlachse der Lichtquelle angeordnet ist.

Erfindungsgemäß ist der Ablenkspiegel als mikromechanischer Ablenkspiegel ausgebildet.

Der Ablenkspiegel kann als oszillierender mikromechanischer Ablenkspiegel ausgebildet sein. Der Ablenkspiegel kann auch als statischer mikromechanischer Ablenkspiegel ausgebildet.

Im Strahlengang der emittierten elektromagnetischen Strahlung kann der Spiegel zwischen der Lichtquelle und dem Ablenkspiegel angeordnet sein. Im Strahlengang der empfangenen elektromagnetischen Strahlung kann der Spiegel zwischen dem Ablenkspiegel und dem optischen Empfänger angeordnet sein.

Der Ablenkspiegel kann entlang einer Achse oszillierend bewegt werden. Der Ablenkspiegel kann auch entlang einer Achse statisch bewegt werden. Es handelt sich in diesen Fällen um einem eindimensionalen Ablenkspiegel. Der Ablenkspiegel kann alternativ entlang zweier Achsen oszillierend bewegt werden. Der Ablenkspiegel kann alternativ auch entlang zweier Achsen statisch bewegt werden. Es handelt sich in diesen Fällen um einen zweidimensionalen Ablenkspiegel.

Der Vorteil der Erfindung besteht darin, dass ein Lidar-Sensor mit geringem Bauvolumen, insbesondere einer geringen Bauhöhe realisiert werden kann. Sowohl die emittierte elektromagnetische Strahlung, welche auf den Ablenkspiegel trifft, als auch die empfangene elektromagnetische Strahlung, welche auf den Ablenkspiegel trifft, können einen kleinen Strahldurchmesser aufweisen. Hierdurch kann ein kleinbauender Ablenkspiegel mit entsprechend hoher Abtastfrequenz verwendet werden. Es kann ein Lidar-Sensor realisiert werden, welcher ausreichend mechanisch robust ist. Durch den Spiegel mit dem Loch können der Strahlengang der emittierten elektromagnetischen Strahlung und der Strahlengang der empfangenen elektromagnetischen Strahlung koaxial zueinander verlaufen. Optische Verluste im Strahlengang der emittierten und der empfangenen elektromagnetischen Strahlung können weitestgehend vermieden werden. Vor allem die empfangene elektromagnetische Strahlung kann mittels des Spiegels weitestgehend verlustfrei auf den optischen Empfänger umgelenkt werden. Der Lidar-Sensor kann einen optischen Empfänger aufweisen, der ausreichend groß und ausreichend sensitiv ist.

Erfindungsgemäß ist vorgesehen, dass die von der Lichtquelle entlang der Hauptstrahlachse emittierte elektromagnetische Strahlung vom Ablenkspiegel um den wenigstens einen Winkel als abgelenkte emittierte elektromagnetische Strahlung in die Umgebung abgelenkt wird, wobei der wenigstens eine Winkel abhängig von der Ausrichtung des Ablenkspiegels ist.

Erfindungsgemäß ist vorgesehen, dass der Lidar-Sensor weiterhin ein Feld mikro-optischer Elemente aufweist. Der Ablenkspiegel und das Feld sind derart angeordnet, dass der wenigstens eine Winkel genau einem mikro-optischen Element zugeordnet ist. Es können jedem Element mehrere Winkel verschiedener Beträge zugeordnet sein.

Erfindungsgemäß weist der Lidar-Sensor weiterhin ein Licht-bündelndes Element auf, welches in einem Abstand zu dem Feld mikro-optischer Elemente angeordnet ist. Jedes der mikro-optischen Elemente weitet, wenn es von der abgelenkten emittierten elektromagnetischen Strahlung getroffen wird, diese abgelenkte emittierte elektromagnetische Strahlung zu einem divergenten Strahl auf. Das Licht-bündelnde Element formt den divergenten Strahl in einen Taststrahl um. Der Vorteil dieser Ausgestaltung besteht darin, dass die Augensicherheit auch bei erhöhter Gesamtleistung der emittierten elektromagnetischen Strahlung gewährleistet werden kann. Der Strahldurchmesser des Taststrahls kann größer als der Pupillendurchmesser des menschlichen Auges sein. Die Empfindlichkeit gegenüber Streupartikeln kann gering gehalten werden.

Die am Ablenkspiegel abgelenkte emittierte elektromagnetische Strahlung tastet nicht unmittelbar die Umgebung ab, sondern das Feld mikro-optischer Elemente. Die Richtung, in die der Taststrahl abgestrahlt wird, ist von der Lage des jeweils getroffenen mikro-optischen Elements relativ zur optischen Achse des Licht-bündelnden Elements abhängig. Der Öffnungswinkel des Lidar-Sensors kann deshalb deutlich größer sein als der Winkel, um den die elektromagnetische Strahlung am Ablenkspiegel maximal abgelenkt wird. Auf diese Weise wird eine Abtastung mit weitem Öffnungswinkel ermöglicht.

In einer weiteren bevorzugten Ausgestaltung der Erfindung ist vorgesehen, dass die mikro-optischen Elemente Mikrolinsen oder reflektierende oder Licht-beugende Elemente sind.

Das bündelnde Element kann eine optische Linse sein, in deren Fokusebene das Feld mikro-optischer Elemente liegt. Hierdurch wird der divergente Strahl in einen Taststrahl umgeformt, bei dem die Strahlen nahezu parallel sind. Alternativ wäre anstelle einer Linse auch ein Hohlspiegel denkbar.

In einer weiteren bevorzugten Ausgestaltung der Erfindung ist vorgesehen, dass das Licht-bündelnde Element sogleich ein Objektiv des optischen Empfängers bildet. Hierdurch kann die empfangene elektromagnetische Strahlung mit der emittierten elektromagnetischen Strahlung koaxial sein. Dadurch müssen bei der Auswertung der empfangenen elektromagnetischen Strahlung keine Paradoxenfehler berücksichtigt werden. Mittels des Spiegels, angeordnet im Strahlengang der empfangenen elektromagnetischen Strahlung zwischen dem Ablenkspiegel und dem optischen Empfänger, kann die empfangene elektromagnetische Strahlung auf den optischen Empfänger umgelenkt werden.

In einer weiteren bevorzugten Ausgestaltung der Erfindung ist vorgesehen, dass auf der optischen Achse des Licht-bündelnden Elements eine Spiegeleinheit angeordnet ist, die die abgelenkte emittierte elektromagnetische Strahlung auf das Feld mikro-optischer Elemente umlenkt. Mittels der Spiegeleinheit kann ebenfalls empfangene elektromagnetische Strahlung auf den Ablenkspiegel umgelenkt werden. Der Vorteil dieser Ausgestaltung besteht darin, dass der Strahlengang des Lidar-Sensors angepasst werden kann.

In einer besonders bevorzugten Ausgestaltung der Erfindung ist vorgesehen, dass die Spiegeleinheit gewölbt ausgebildet ist. Der Vorteil dieser Ausgestaltung besteht darin, dass Abbildungsfehler ausgeglichen werden können.

In einer weiteren Ausgestaltung der Erfindung ist vorgesehen, dass der optische Empfänger zwei oder mehr Detektorelemente aufweist, wobei die zwei oder mehr Detektorelemente zeilenförmig oder als Matrix angeordnet sind. Der Vorteil dieser Ausgestaltung besteht darin, dass anhand der Position und der Leistung der empfangenen elektromagnetischen Strahlung eine Plausibilisierung einer gemessenen Entfernung eines in der Umgebung erfassten Objektes durchgeführt werden kann. Diese Möglichkeit ergibt sich dadurch, dass der Ablenkspiegel eine Verschiebung der empfangenen elektromagnetischen Strahlung entsprechend der Laufzeit der elektromagnetischen Strahlung bewirkt.

Erfindungsgemäß wird außerdem ein Verfahren zur Ansteuerung eines Lidar-Sensors zur Erfassung eines Objektes in der Umgebung beansprucht. Das Verfahren weist folgende Schritte auf: Ansteuerung einer Lichtquelle zur Emission elektromagnetischer Strahlung durch ein Loch eines Spiegels, Ansteuerung eines Ablenkspiegel zur Ablenkung der emittierten elektromagnetischen Strahlung um wenigstens einen Winkel in die Umgebung und Empfangen elektromagnetischer Strahlung, die vom Objekt reflektiert wurde, mittels eines optischen Empfängers. Hierbei ist der Ablenkspiegel als mikromechanischer Ablenkspiegel ausgebildet.

In einer Ausgestaltung der Erfindung ist vorgesehen, dass die Ansteuerung des Ablenkspiegels derart geschieht, dass die um um den wenigstens einen Winkel abgelenkte emittierte elektromagnetische Strahlung genau ein mikro-optisches Element eines Feldes trifft.

### Zeichnungen

Nachfolgend werden zwei Ausführungsbeispiele der vorliegenden Erfindung anhand der beiliegenden Zeichnungen näher erläutert. Dabei zeigen:
Figur 1 eine Skizze einer für das Verständnis der Erfindung nützlichen Ausführungsform eines Lidar-Sensors;
Figur 2 eine Skizze eines Lidar-Sensors gemäß einer erfindungsgemäßen Ausführungsform.

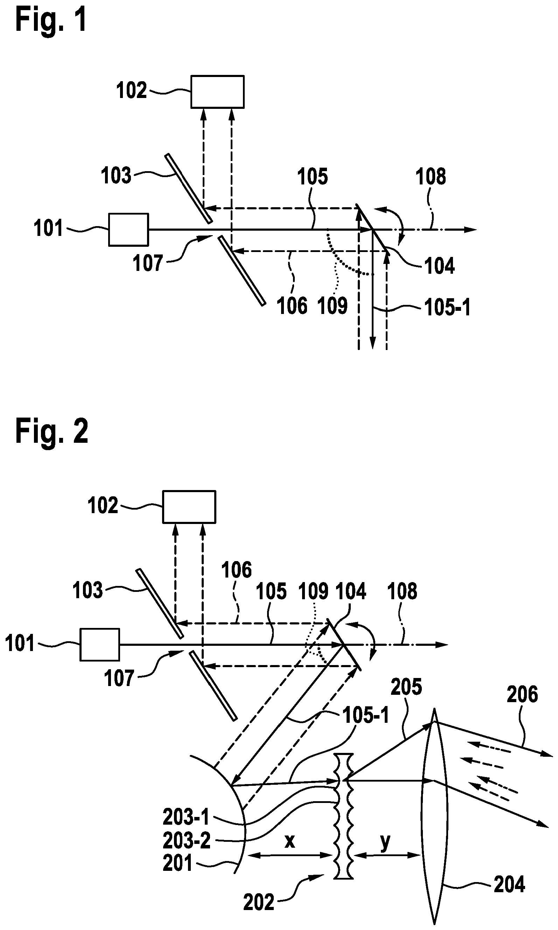

Der in Figur 1 gezeigte Lidar-Sensor weist als Lichtquelle 101 einen Laser auf, der elektromagnetische Strahlung 105 im sichtbaren Bereich des Spektrums oder wahlweise auch im Infrarotbereich emittiert. Der Lidar-Sensor weist weiterhin den Spiegel 103 auf. Der Spiegel 103 weist im Zentrum seiner Spiegelfläche das Loch 107 auf. Der Spiegel 103 ist zwischen der Lichtquelle 101 und dem Ablenkspiegel 104 des Lidar-Sensors angeordnet. Der Spiegel 103 ist so angeordnet, dass das Loch 107 auf der Hauptstrahlachse 108 der Lichtquelle 101 angeordnet ist. Die von der Lichtquelle 101 entlang der Hauptstrahlachse 108 emittierte elektromagnetische Strahlung 105 wird weitestgehend verlustfrei durch das Loch 107 auf den Ablenkspiegel 104 gerichtet.

Der Ablenkspiegel 104 ist ein mikromechanischer Ablenkspiegel. Wie durch den Doppelpfeil angedeutet, wird der Ablenkspiegel 104 entlang einer Achse oszillierend oder statisch bewegt. Es ist weiterhin möglich, dass der Ablenkspiegel 104 um eine zweite Achse, die rechtwinklig zur ersten Achse verläuft, oszillierend oder statisch bewegt wird. Der Ablenkspiegel 104 lenkt die emittierte elektromagnetische Strahlung 105 als abgelenkte emittierte elektromagnetische Strahlung 105-1 in die Umgebung ab. Die Ansteuerung des Ablenkspiegels 104 erfolgt hierbei derart, dass die emittierte elektromagnetische Strahlung 105 bei einer ersten Ausrichtung um wenigstens einen Winkel als abgelenkte emittierte elektromagnetische Strahlung 105-1 in die Umgebung abgelenkt wird. In Figur 1 ist dieser eine Winkel 109 markiert. Bei einer zweiten Ausrichtung des Ablenkspiegels kann die emittierte elektromagnetische Strahlung 105 um wenigstens einen weiteren, vom ersten Winkel verschiedenen, Winkel als abgelenkte emittierte elektromagnetische Strahlung 105-1 in die Umgebung abgelenkt werden.

Trifft die abgelenkte emittierte elektromagnetische Strahlung 105-1 in der Umgebung auf ein Objekt, so wird die elektromagnetische Strahlung von dem Objekt reflektiert und/oder zurück gestreut. Die reflektierte und/oder zurückgestreute elektromagnetische Strahlung 106 wird vom Lidar-Sensor empfangen. Die elektromagnetische Strahlung 106 fällt über den Ablenkspiegel 104 und den bereits oben beschriebenen Spiegel 103 auf den optischen Empfänger 102. Der Spiegel 103 ist entlang des Strahlengangs der empfangenen elektromagnetischen Strahlung zwischen dem Ablenkspiegel 104 und dem optischen Empfänger 102 angeordnet. Der optische Empfänger 102 weist beispielsweise zeilenförmig oder als Matrix angeordnete Detektorelemente auf.

Figur 2 zeigt einen Lidar-Sensor gemäß einer erfindungsgemäßen Ausführungsform. Bei diesem Lidar-Sensor wird die von der Lichtquelle 101 entlang der Hauptstrahlachse 108, und weitestgehend verlustfrei durch das Loch 107 auf den Ablenkspiegel 104 des Lidar-Sensors gerichtete, emittierte elektromagnetische Strahlung 105 mittels des Ablenkspiegel 104 als abgelenkte emittierte elektromagnetische Strahlung 105-1 auf ein Feld 202 mikrooptischer Elemente 203 geführt. Als mikrooptische Elemente sind in diesem Beispiel Licht-beugende Elemente 203 vorgesehen. Wahlweise könnten jedoch auch Licht-brechende oder -reflektierende Elemente vorgesehen sein.

Der wenigstens eine Winkel, um den die emittierte elektromagnetische Strahlung 105 als abgelenkte emittierte elektromagnetische Strahlung 105-1 abgelenkt wird, ist genau einem mikro-optischen Elemente 203-1, 203-2 zugeordent. Der in Figur 2 eingezeichnete Winkel 109 ist dem mikro-optischen Elemente 203-1 zugeordnet. Es können jedem Element 203 mehrere Winkel verschiedener Beträge zugeordnet sein. Wird beispielsweise die emittierte elektromagnetische Strahlung 105 vom Ablenkspiegel 104 um einen Winkel abgelenkt, dessen Betrag sich geringfügig vom Betrag des Winkels 109 unterscheidet, so trifft die abgelenkte emittierte elektromagnetische Strahlung 105-1 ebenso auf das mikro-optische Elemente 203-1. Überschreitet die Differenz der Beträge des Winkels 109 und eines weiteren Ablenkwinkels einen vorgegebenen Wert, so trifft die abgelenkte emittierte elektromagnetische Strahlung 105-1 beispielsweise auf das benachbarte mikro-optische Element 203-2.

Dasjenige der Licht-beugenden Elemente 203, das von der abgelenkten elektromagnetischen Strahlung 105-1 getroffen wird, weitet die abgelenkte emittierte elektromagnetische Strahlung 105-1 zu einem divergenten Strahl 205 auf. Der divergente Strahl 205 trifft auf ein Licht-bündelndes Element in Form einer Linse 204. Der Abstand y zwischen dem Feld 202 und der Linse 204 entspricht etwa der Brennweite der Linse 204. Die Linse 204 formt den divergenten Strahl 205 einen annähernd parallelen Taststrahl 206 um. Der Strahldurchmesser des Taststrahls 206 ist größer als der Strahldurchmesser des Strahls der emittierten elektromagnetischen Strahlung 105. Der Strahldurchmesser des Taststrahls 206 ist größer als der Strahldurchmesser des Strahls der abgelenkten emittierten elektromagnetischen Strahlung 105-1.

Die Abstrahlrichtung des Taststrahls 206 ist von der Lage des mikrooptischen Elements 203, in Bezug auf die optische Achse des Licht-bündelnden Elements 204, abhängig, dass gerade von der abgelenkten emittierten elektromagnetischen Strahlung 105-1 getroffen wird. Auf diese Weise bewirkt der Ablenkspiegel 104 mittelbar auch eine Ablenkung des Taststrahls 206. Der Taststrahl 206 überstreicht die Umgebung des Lidar-Sensors. Der Winkelbereich, der von dem Taststrahl 206 überstrichen wird, ist von der Brennweite der Linse 204 abhängig. Er kann deutlich mehr als das zweifache des Winkelbereichs betragen, in dem der Ablenkspiegel 104 bewegt wird.

Zwischen dem Ablenkspiegel 104 und dem Feld 202 ist eine weitere Spiegeleinheit 201 vorgesehen. Die Spiegeleinheit 201 ist in einem Abstand x zum Feld 202 angeordnet. Diese weitere Spiegeleinheit 201 ist zum Ausgleich von Abbildungsfehlern als gewölbter Spiegel ausgebildet. Die Spiegeleinheit 201 lenkt die vom Ablenkspiegel 104 abgelenkte elektromagnetische Strahlung 105 so um, dass sie längs der optischen Achse der Linse 204 auf das Feld 202 fällt.

## Patentansprüche

1. Lidar-Sensor zur Erfassung eines Objektes in der Umgebung mit wenigstens
• einer Lichtquelle (101) zur Emission elektromagnetischer Strahlung,
• einem Ablenkspiegel (104) zum Ablenken der emittierten elektromagnetischen Strahlung (105) um wenigstens einen Winkel (109) in die Umgebung, wobei der Ablenkspiegel (104) als mikromechanischer Ablenkspiegel ausgebildet ist,
• einem optischen Empfänger (102) zum Empfangen elektromagnetischer Strahlung (106), die vom Objekt reflektiert wurde, und
• einem Spiegel (103) zum Umlenken der empfangenen elektromagnetischen Strahlung (106) auf den optischen Empfänger (102), wobei der Spiegel (103) ein Loch (107) aufweist, und wobei
• das Loch (107) auf einer Hauptabstrahlachse (108) der Lichtquelle (101) angeordnet ist,
**dadurch gekennzeichnet, dass** der Lidar-Sensor weiterhin aufweist
• ein Feld (202) mikro-optischer Elemente (203-1, 203-2); wobei
• der Ablenkspiegel (104) und das Feld (202) derart angeordnet sind, dass der wenigstens eine Winkel (109) genau einem mikro-optischen Element (203-1, 203-2) zugeordnet ist; und wobei der Lidar-Sensor weiterhin aufweist
• ein Licht-bündelndes Element (204) angeordnet in einem Abstand (y) zu dem Feld (202) mikro-optischer Elemente (203-1, 203-2); wobei
• jedes der mikro-optischen Elemente (203-1, 203-2), wenn es von der abgelenkten emittierten elektromagnetischen Strahlung (105-1) getroffen wird, diese abgelenkte emittierte elektromagnetische Strahlung (105-1) zu einem divergenten Strahl (205) aufweitet; und wobei
• das Licht-bündelnde Element (204) den divergenten Strahl (205) in einen Taststrahl (206) umformt.

2. Lidar-Sensor nach Anspruch 1, **dadurch gekennzeichnet dass**, die von der Lichtquelle (101) entlang der Hauptstrahlachse (108) emittierte elektromagnetische Strahlung (105) vom Ablenkspiegel (104) um den wenigstens einen Winkel (109) als abgelenkte emittierte elektromagnetische Strahlung (105-1) in die Umgebung abgelenkt wird, wobei der wenigstens eine Winkel abhängig von der Ausrichtung des Ablenkspiegels ist.

3. Lidar-Sensor nach Anspruch 1, **dadurch gekennzeichnet, dass** die mikro-optischen Elemente (203-1, 203-2) Mikrolinsen oder reflektierende Elemente oder Licht-beugende Elemente sind.

4. Lidar-Sensor nach Anspruch 1, **dadurch gekennzeichnet, dass** das Licht-bündelnde Element (204) zugleich ein Objektiv des optischen Empfängers (102) bildet.

5. Lidar-Sensor nach einem der Ansprüche 1 bis 4, **dadurch gekennzeichnet, dass** auf der optischen Achse des Licht-bündelnden Elements (204) eine Spiegeleinheit (201) angeordnet ist, die die abgelenkte emittierte elektromagnetische Strahlung (105-1) auf das Feld (202) mikro-optischer Elemente (203-1, 203-2) umlenkt.

6. Lidar-Sensor nach Anspruch 5, **dadurch gekennzeichnet, dass** die Spiegeleinheit (201) gewölbt ausgebildet ist.

7. Lidar-Sensor nach einem der Ansprüche 1 bis 6, **dadurch gekennzeichnet, dass** der optische Empfänger (102) zwei oder mehr Detektorelemente aufweist, wobei die zwei oder mehr Detektorelemente zeilenförmig oder als Matrix angeordnet sind.

8. Verfahren zur Ansteuerung eines Lidar-Sensors zur Erfassung eines Objektes in der Umgebung mit den Schritten:
• Ansteuerung einer Lichtquelle (101) zur Emission elektromagnetischer Strahlung (105) durch ein Loch (107) eines Spiegels (103), wobei
• das Loch (107) auf einer Hauptabstrahlachse (108) der Lichtquelle (101) angeordnet ist;
• Ansteuerung eines Ablenkspiegels (104) zur Ablenkung der emittierten elektromagnetischen Strahlung (105) um wenigstens einen Winkel (109) in die Umgebung, wobei der Ablenkspiegel (104) als mikromechanischer Ablenkspiegel ausgebildet ist;
• Empfangen elektromagnetischer Strahlung (106), die vom Objekt reflektiert wurde, mittels eines optischen Empfängers (102); und
• Umlenken der empfangenen elektromagnetischen Strahlung (106) auf den optischen Empfänger (102) mittels des Spiegels (103);
**dadurch gekennzeichnet, dass**
die Ansteuerung des Ablenkspiegels (104) derart geschieht, dass die um den wenigstens einen Winkel (109) abgelenkte emittierte elektromagnetische Strahlung (105) genau ein mikro-optisches Element (203-1, 203-2) eines Feldes (202) mikro-optischer Elemente (203-1, 203-2) trifft; und
wobei der Lidar-Sensor weiterhin aufweist
• ein Licht-bündelndes Element (204) angeordnet in einem Abstand (y) zu dem Feld (202) mikro-optischer Elemente (203-1, 203-2); wobei
• jedes der mikro-optischen Elemente (203-1, 203-2), wenn es von der abgelenkten emittierten elektromagnetischen Strahlung (105-1) getroffen wird, diese abgelenkte emittierte elektromagnetische Strahlung (105-1) zu einem divergenten Strahl (205) aufweitet; und wobei
• das Licht-bündelnde Element (204) den divergenten Strahl (205) in einen Taststrahl (206) umformt.

## Claims

1. Lidar sensor for detecting an object in the surrounding area, having at least
• a light source (101) for emitting electromagnetic radiation,
• a deflection mirror (104) for deflecting the emitted electromagnetic radiation (105) by at least one angle (109) into the surrounding area, wherein the deflection mirror (104) is designed as a micromechanical deflection mirror,
• an optical receiver (102) for receiving electromagnetic radiation (106), which has been reflected by the object, and
• a mirror (103) for steering the received electromagnetic radiation (106) onto the optical receiver (102), wherein the mirror (103) has a hole (107), and wherein
• the hole (107) is arranged on a main axis of emission (108) of the light source (101),
**characterized in that** the lidar sensor furthermore has
• a field (202) of micro-optical elements (203-1, 203-2); wherein
• the deflection mirror (104) and the field (202) are arranged such that the at least one angle (109) is assigned to exactly one micro-optical element (203-1, 203-2); and wherein the lidar sensor furthermore has
• a light-focusing element (204) arranged at a distance (y) from the field (202) of micro-optical elements (203-1, 203-2), wherein
• each of the micro-optical elements (203-1, 203-2), when it is impinged upon by the deflected emitted electromagnetic radiation (105-1), expands this deflected emitted electromagnetic radiation (105-1) into a divergent beam (205); and wherein
• the light-focusing element (204) reshapes the divergent beam (205) into a scanning beam (206).

2. Lidar sensor according to Claim 1, **characterized in that** the electromagnetic radiation (105) emitted by the light source (101) along the main beam axis (108) is deflected by the deflection mirror (104) by the at least one angle (109) into the surrounding area in the form of deflected emitted electromagnetic radiation (105-1), wherein the at least one angle is dependent on the orientation of the deflection mirror.

3. Lidar sensor according to Claim 1, **characterized in that** the micro-optical elements (203-1, 203-2) are microlenses or reflective elements or diffractive elements.

4. Lidar sensor according to Claim 1, **characterized in that** the light-focusing element (204) at the same time forms an objective of the optical receiver (102).

5. Lidar sensor according to any of Claims 1 to 4, **characterized in that** a mirror unit (201) is arranged on the optical axis of the light-focusing element (204), which mirror unit steers the deflected emitted electromagnetic radiation (105-1) onto the field (202) of micro-optical elements (203-1, 203-2).

6. Lidar sensor according to Claim 5, **characterized in that** the mirror unit (201) is curved.

7. Lidar sensor according to any of Claims 1 to 6, **characterized in that** the optical receiver (102) has two or more detector elements, wherein the two or more detector elements are arranged in lines or as a matrix.

8. Method for controlling a lidar sensor for detecting an object in the surrounding area, including the steps of:
• controlling a light source (101) to emit electromagnetic radiation (105) through a hole (107) in a mirror (103), wherein
• the hole (107) is arranged on a main axis of emission (108) of the light source (101);
• controlling a deflection mirror (104) to deflect the emitted electromagnetic radiation (105) by at least one angle (109) into the surrounding area, wherein the deflection mirror (104) is designed as a micromechanical deflection mirror;
• receiving electromagnetic radiation (106), which has been reflected by the object, by means of an optical receiver (102); and
• steering the received electromagnetic radiation (106) onto the optical receiver (102) by means of the mirror (103);
**characterized in that**
the deflection mirror (104) is controlled in such a way that the emitted electromagnetic radiation (105), which has been deflected by the at least one angle (109), impinges upon exactly one micro-optical element (203-1, 203-2) of a field (202) of micro-optical elements (203-1, 203-2); and
wherein the lidar sensor furthermore has
• a light-focusing element (204) arranged at a distance (y) from the field (202) of micro-optical elements (203-1, 203-2); wherein
• each of the micro-optical elements (203-1, 203-2), when it is impinged upon by the deflected emitted electromagnetic radiation (105-1), expands this deflected emitted electromagnetic radiation (105-1) into a divergent beam (205); and wherein
• the light-focusing element (204) reshapes the divergent beam (205) into a scanning beam (206).

## Revendications

1. Capteur lidar permettant de détecter un objet dans l'environnement, comprenant au moins
• une source de lumière (101) pour émettre un rayonnement électromagnétique,
• un miroir de déviation (104) pour dévier le rayonnement électromagnétique émis (105) selon au moins un angle (109) dans l'environnement, le miroir de déviation (104) étant réalisé comme un miroir de déviation micromécanique,
• un récepteur optique (102) pour recevoir le rayonnement électromagnétique (106) qui a été réfléchi par l'objet, et
• un miroir (103) pour dévier le rayonnement électromagnétique reçu (106) vers le récepteur optique (102), le miroir (103) présentant un trou (107), et dans lequel
• le trou (107) est disposé sur un axe de faisceau principal (108) de la source de lumière (101),
**caractérisé en ce que** le capteur lidar présente en outre
• un champ (202) d'éléments micro-optiques (203-1, 203-2) ; dans lequel
• le miroir de déviation (104) et le champ (202) sont disposés de telle sorte que ledit au moins un angle (109) est associé à un élément micro-optique exactement (203-1, 203-2); et
le capteur lidar présentant en outre
• un élément de focalisation de lumière (204) qui est disposé à une distance (y) du champ (202) d'éléments micro-optiques (203-1, 203-2) ; dans lequel
• chacun des éléments micro-optiques (203-1, 203-2), lorsqu'il est atteint par le rayonnement électromagnétique émis dévié (105-1), élargit ce rayonnement électromagnétique émis dévié (105-1) en un faisceau divergent (205) ; et dans lequel
• l'élément de focalisation de lumière (204) transforme le faisceau divergent (205) en un faisceau de balayage (206).

2. Capteur lidar selon la revendication 1, **caractérisé en ce que** le rayonnement électromagnétique (105) émis par la source de lumière (101) le long de l'axe de faisceau principal (108) est dévié par le miroir de déviation (104) selon ledit au moins un angle (109) comme un rayonnement électromagnétique émis dévié (105-1) dans l'environnement, ledit au moins un angle étant dépendant de l'alignement du miroir de déviation.

3. Capteur lidar selon la revendication 1, **caractérisé en ce que** les éléments micro-optiques (203-1, 203-2) sont des microlentilles ou des éléments réfléchissants ou des éléments diffractifs.

4. Capteur lidar selon la revendication 1, **caractérisé en ce que** l'élément de focalisation de lumière (204) est en même temps un objectif du récepteur optique (102).

5. Capteur lidar selon l'une quelconque des revendications 1 à 4, **caractérisé en ce que** sur l'axe optique de l'élément de focalisation de lumière (204) est disposée une unité de miroir (201) qui dévie le rayonnement électromagnétique émis dévié (105-1) vers le champ (202) d'éléments micro-optiques (203-1, 203-2) .

6. Capteur lidar selon la revendication 5, **caractérisé en ce que** l'unité de miroir (201) est réalisée de manière courbe.

7. Capteur lidar selon l'une quelconque des revendications 1 à 6, **caractérisé en ce que** le récepteur optique (102) présente deux ou plusieurs éléments de détecteur, les deux ou plusieurs éléments de détecteur étant disposés sous forme rangées ou de matrice.

8. Procédé permettant de piloter un capteur lidar pour détecter un objet dans l'environnement, comprenant les étapes consistant à :
• piloter une source de lumière (101) pour émettre un rayonnement électromagnétique (105) à travers un trou (107) d'un miroir (103), dans lequel
• le trou (107) est disposé sur un axe de faisceau principal (108) de la source de lumière (101) ;
• piloter un miroir de déviation (104) pour dévier le rayonnement électromagnétique émis (105) selon au moins un angle (109) dans l'environnement, le miroir de déviation (104) étant réalisé comme un miroir de déviation micromécanique ;
• recevoir au moyen d'un récepteur optique (102) un rayonnement électromagnétique (106) qui a été réfléchi par l'objet ; et
• dévier le rayonnement électromagnétique reçu (106) vers le récepteur optique (102) au moyen du miroir (103) ;
**caractérisé en ce que** le pilotage du miroir de déviation (104) est effectué de telle sorte que le rayonnement électromagnétique émis (105) dévié selon ledit au moins un angle (109) est incident sur exactement un élément micro-optique (203-1, 203-2) d'un champ (202) d'éléments micro-optiques ; et
dans lequel le capteur lidar présente en outre
• un élément de focalisation de lumière (204) qui est disposé à une distance (y) du champ (202) d'éléments micro-optiques (203-1, 203-2) ; dans lequel
• chacun des éléments micro-optiques (203-1, 203-2), lorsque le rayonnement électromagnétique émis dévié (105-1) est incident sur celui-ci, élargit ce rayonnement électromagnétique émis dévié (105-1) en un faisceau divergent (205) ; et dans lequel
• l'élément de focalisation de lumière (204) transforme le faisceau divergent (205) en un faisceau de balayage (206).
